# EUROPEAN PATENT APPLICATION

(11) **EP 2 704 146 A2**
(43) Date of publication of application: **05.03.2014**
(21) Application number: 13181647.2
(22) Date of filing: 26.08.2013
(51) Int. Cl.: G11B 15/68, G11B 23/03

(54) **Cassette and changer apparatus for optical disk**

(30) Priority: 31.08.2012 JP 2012192423
(71) Applicant: Kabushiki Kaisha Toshiba, Inc., Tokyo 105-8001 (JP)
(72) Inventor: Kuroda, Sumio, Tokyo, 105-8001 (JP); Shimomura, Kazuhito, Tokyo, 105-8001 (JP); Sakai, Yuji, Tokyo, 105-8001 (JP); Suzuki, Kenichiro, Tokyo, 105-8001 (JP)
(74) Representative: Henkel, Breuer & Partner

(57) **Abstract**

According to one embodiment, the cassette (1) is provided with an outer shell (2), a plurality of trays (3), a shutter (4), and a lock mechanism (5). The outer shell (2) has an upper wall (21) and a lower wall (22) each including a square shape and a circular shape, a side wall (23) between edges (211, 221) of the square shapes, and an opening portion (20) between edges (212, 222) of the circular shapes. A tray (3) is an annular shape having a concave portion (31) in which an optical disk (D) is placed. The shutter (4) is a semicircular shape, includes a gear (411) on an outer peripheral wall (41) and a plurality of shelves (421) to support each of the trays (3) on an inner peripheral wall (42), and rotates from a first position (P1) for closing an opening portion (20) to a second position (P2) for opening the opening portion (20). The lock mechanism (5) locks the shutter (4) in the first position (P1).

## Description

Embodiments described herein relate generally to a cassette for storing a plurality of optical disks and a changer apparatus to be loaded with the cassette.

There is provided a disk auto changer apparatus that includes a plurality of optical disk drives for writing or reading information to or from an optical disk, and performs parallel processing on the optical disks by each of the optical disk drives. This type of changer apparatus is provided with a carrier unit for automatically replacing the optical disks so that a plurality of optical disks is simultaneously used. The optical disks to be replaced are stored in a magazine so that the plurality of disks can be handled as a batch. Since the optical disk that stores therein important data is intolerant of even slight stain and dust, it is handled while being stored in a cassette.

There is also provided a magazine type cassette that stores therein a plurality of optical disks. Such a cassette is provided with trays on which optical disks are individually placed, a container for storing the trays while the trays are stacked together, and a shutter covering an opening portion through which the tray is pulled out. A shutter seals the opening portion so that the optical disk is not exposed to outside air when the cassette is handled. The optical disk is pulled out together with the tray through the opened shutter by the carrier unit, and is removed from the tray or returned to the tray by a chucking device.

In the meantime, the cassette that stores therein the optical disk is provided with a lock mechanism so that the shutter is not carelessly opened by a user. The lock mechanism is provided with a portion to be operated exposed outside so that the lock mechanism can be easily released by a mechanism provided in an optical disk drive or a disk changer apparatus. Since the lock mechanism has the portion to be operated exposed outside, the shutter is opened out of curiosity or carelessly by the user. When dust infiltrates inside the cassette, the reliability of the optical disk is spoiled.

Taking this into consideration, it is possible to make an arrangement so that the shutter does no open. However, when the structure of the lock mechanism is complicated, it not only requires more manufacturing cost but also increases a volume of the cassette. In addition, in the case of a magazine type cassette to be applied to a disk changer apparatus, there are some cases where a plurality of cassettes are used by being stacked together or placed adjacent to one another. Accordingly, it is desirable that the cassette with the shutter thereof opened not be bulky, or a mechanism provided on a side of an archive device not be complicated or bulky. Further, if the structure or the mechanism is complicated, it is not suitable for mass production, and the production cost cannot be reduced because it can only be used for a specific device.

In view of this, the present invention, according to an embodiment thereof, provides a cassette which stores an optical disk, is provided with a shutter that can be locked and released with a simple mechanism, and is excellent in the mass productivity and multiplicity of use, and a changer apparatus to be loaded with the cassette.

A general architecture that implements the various features of the embodiments will now be described with reference to the drawings. The drawings and the associated descriptions are provided to illustrate the embodiments and not to limit the scope of the invention.
FIG. 1 is a perspective view illustrating a situation in which a cassette according to a first embodiment is inserted into a changer apparatus;
FIG. 2 is a perspective view of the cassette in FIG. 1 viewed from a shutter side;
FIG. 3 is a perspective view of the cassette in FIG. 2 viewed from an opposite side;
FIG. 4 is an exploded perspective view of the cassette in FIG. 2;
FIG. 5 is an enlarged cross sectional perspective view of the cassette in FIG. 2 taken along a radial direction thereof;
FIG. 6 is a bottom view of the cassette in FIG. 2;
FIG. 7 is a plan view of the cassette in FIG. 2 while a shutter is in a closed position, and an upper shell is removed;
FIG. 8 is an enlarged plan view of a lock mechanism and the vicinity thereof in FIG. 7;
FIG. 9 is a perspective view of the lock mechanism in FIG. 8;
FIG. 10 is a plan view illustrating a state in which the lock mechanism in FIG. 7 is released;
FIG. 11 is an enlarged plan view of the lock mechanism and the vicinity thereof in FIG. 10;
FIG. 12 is a perspective view of the lock mechanism in FIG. 11;
FIG. 13 is a plan view illustrating a state in which a drive gear is engaged with a gear of the shutter of the cassette in FIG. 10;
FIG. 14 is a plan view illustrating a state in which the drive gear in FIG. 13 rotates, and the shutter comes to a second position (closed position);
FIG. 15 is a perspective view of the cassette in FIG. 14;
FIG. 16 is a perspective view illustrating a state in which a guide rail approaches the cassette in FIG. 15;
FIG. 17 is an enlarged perspective view of the cassette and a tip portion of the guide rail in FIG. 16;
FIG. 18 is a perspective view illustrating a state in which the tip portion of the guide rail in FIG. 17 moves to a position immediately before the tip portion engages with a guide hole of the cassette;
FIG. 19 is a perspective view illustrating a state in which the tip portion of the guide rail in FIG. 18 engages with the guide hole of the cassette;
FIG. 20 is a plan view illustrating a state in which a hook is engaged with a tray of the cassette in FIG. 19;
FIG. 21 is perspective view of the cassette in FIG. 20;
FIG. 22 is a perspective view illustrating a state while the tray is pulled out from the cassette in FIG. 21;
FIG. 23 is a perspective view illustrating a state in which the tray is completely pulled out from the cassette in FIG. 22;
FIG. 24 is a perspective view illustrating a state after an optical disk is removed from the tray in FIG. 23;
FIG. 25 is a perspective view illustrating a state while the tray in FIG. 24 is returned to an outer shell of the cassette;
FIG. 26 is a perspective view of a cassette according to a second embodiment viewed from a side of a lower shell;
FIG. 27 is a perspective view of the cassette in FIG. 26 viewed from a side of an upper shell;
FIG. 28 is a cross sectional perspective view of the cassette in FIG. 27 taken along a line F28-F28;
FIG. 29 is a perspective view illustrating state in which a positioning rod of the cassette in FIG. 28 is projected upward;
FIG. 30 is a cross sectional perspective view of the cassettes in FIG. 27 arranged in three tiers and taken along the line F28-F28;
FIG. 31 is a perspective view illustrating a state in which rods of the cassettes in FIG. 30 are interlocked and the cassettes are positioned;
FIG. 32 is a perspective view of a cassette according to a third embodiment;
FIG. 33 is a plan view of the cassette in FIG. 32;
FIG. 34 is an enlarged perspective view of a lock mechanism of the cassette and the vicinity thereof in FIG. 32; and
FIG. 35 is a perspective view illustrating a state in which the lock mechanism in FIG. 34 is released.

Various embodiments will be described hereinafter with reference to the accompanying drawings.

In general, according to one embodiment, a cassette according to an embodiment of the present invention includes an outer shell, a plurality of trays, a shutter, and a lock mechanism. The outer shell has an upper wall and a lower wall each including a square shape and a circular shape combined together, a side wall connecting between edges of the square shapes, and an opening portion provided between edges of the circular shapes. A tray includes a concave portion for placing an optical disk therein, is formed in an annular shape to support an outer peripheral edge of the optical disk, is stacked on top of one another and is stored between the upper wall and the lower wall. The shutter is formed in at least a semicircular shape along the edges of the circular shapes of the upper wall and the lower wall, includes a gear on an outer peripheral wall and a plurality of shelves on an inner peripheral wall of the shatter each to support each of the trays along at least half a perimeter, and rotates along the edges of the circular shapes from a first position for closing an opening portion to a second position for opening the opening portion. The lock mechanism is arranged between the side wall of the outer shell and a cylindrical surface along an outer peripheral wall of the shutter, and is held by an elastic force in an engaging position where the shutter is locked in a first position.

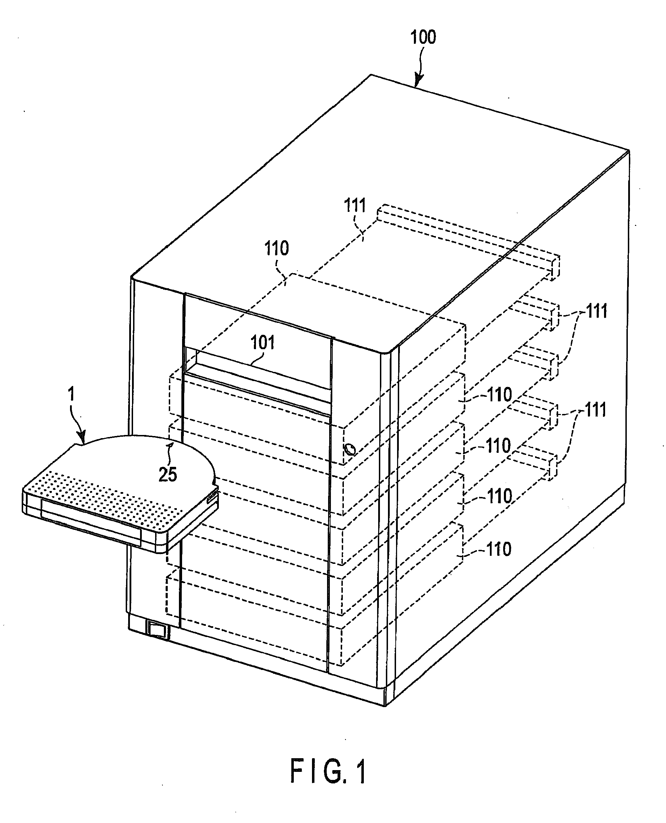

A cassette 1 according to a first embodiment of the present invention will be described with reference to FIGS. 1 to 25. The cassette 1 stores therein a plurality of optical disks, and is applied to a changer apparatus 100 equipped with a plurality of optical disk drives 110. According to this embodiment, as shown in FIG. 1, the changer apparatus 100 includes five units of the disk drives 110 arranged vertically. A slot 101 through which the cassette 1 is inserted is opened in a position higher than the uppermost disk drive 110. A tray 111 of each of the disk drives 110 is pulled out in a direction opposite to a side on which the slot 101 is opened, i.e., in a backward direction opposite to a frontward direction which is a side on which the slot 101 is opened. When the cassette 1 is inserted through the slot 101, optical disks removed from the cassette 1 are individually loaded on the disk drives 110 by a transport mechanism provided in the changer apparatus 100.

Upon receiving data together with a recording command outputted from a host computer or the like, the changer apparatus 100 divides the data and performs parallel recording processing on the optical disks individually by the disk drives. Similarly, upon receiving a reading command from the host computer, the changer apparatus 100 reads the data that is divided and recorded individually on the optical disks by the disk drives 110, combines the data together as one piece of data, and outputs the data thus combined to the host computer. Here, a detailed method for dividing and recording the data, and a detailed method for combining the divided data are omitted. When the cassette 1 is removed from the changer apparatus 100, the transport mechanism returns the individual optical disks to the cassette 1 after post-processing of the recording or the like is performed, and ejects the cassette 1 through the slot 101.

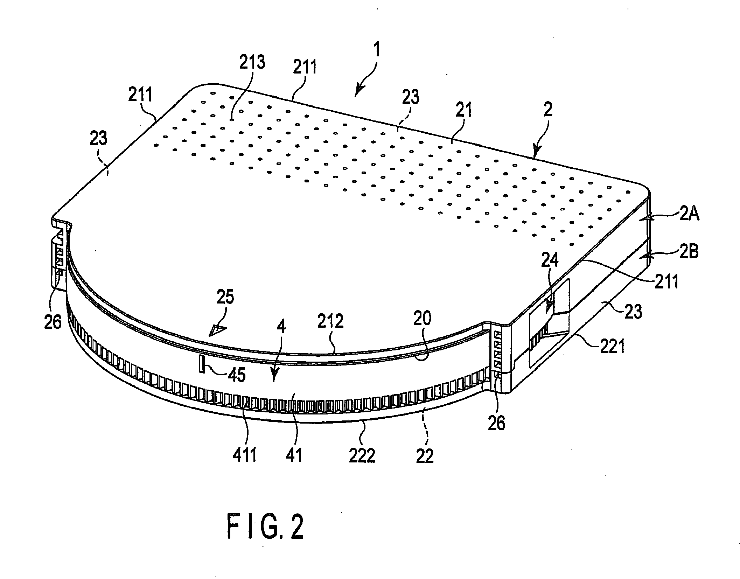

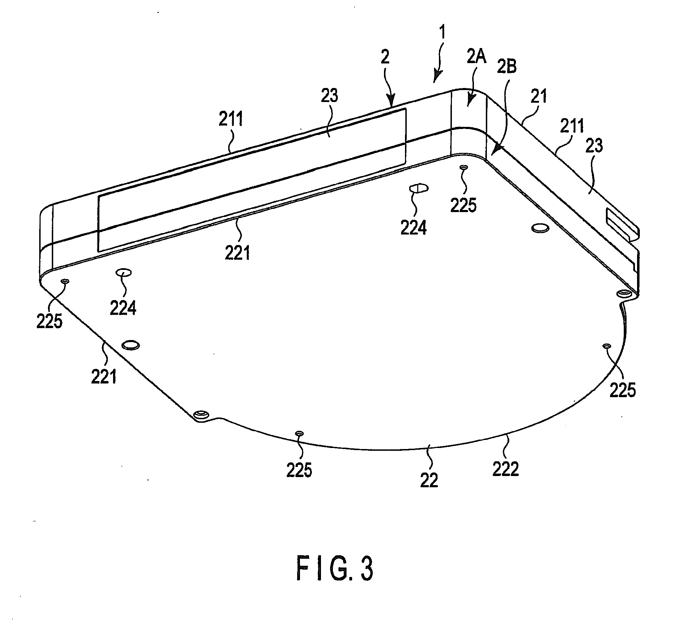

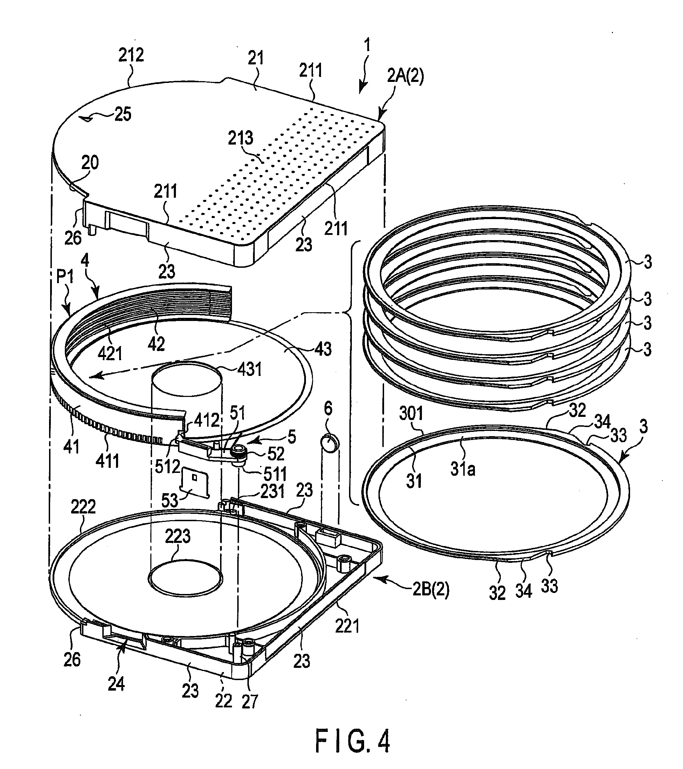

The structure of the cassette 1 will be described in further detail. FIGS. 2 and 3 illustrate an exterior of the cassette 1. Further, FIG. 4 illustrates an exploded perspective view of the cassette 1. The cassette 1, as shown in FIG. 4, includes an outer shell 2, a plurality of trays 3, a shutter 4, and a lock mechanism 5. As shown in FIGS. 2 and 3, the cassette 1 has an exterior including a combination of halves of a circular cylinder and a rectangular parallelepiped.

The outer shell 2 includes an upper wall 21 and a lower wall 22 each of which having a shape resulted from combining a square shape and a circular shape together, a side wall 23 connecting between edges 211 and 221 of the square shapes of the upper wall 21 and the lower wall 22 individually, and an opening portion 20 formed by entirely opening the space between edges 212 and 222 of the circular shapes. As shown in FIG. 4, the outer shell 2 is formed by being separated into an upper shell 2A and a lower shell 2B.

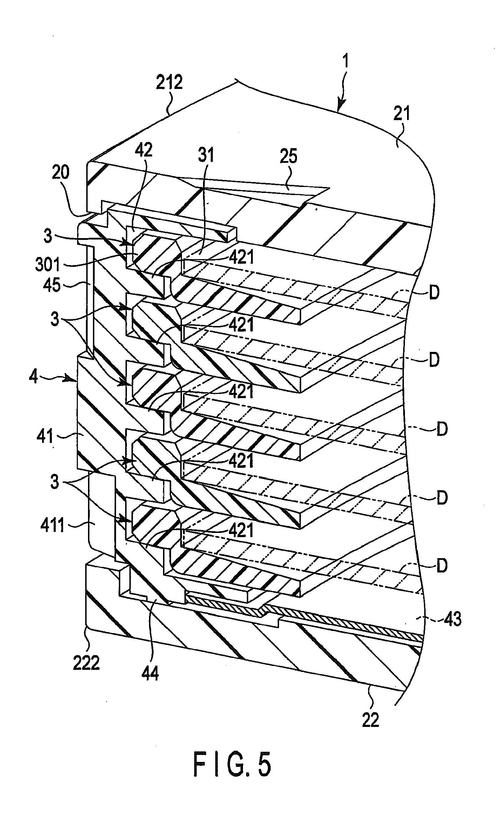

A plural number of trays 3 having the same shape, e.g., five in this embodiment as shown in FIG. 4, are prepared, and stacked together between the upper wall 21 and the lower wall 22. Each of the trays 3 is formed into an annular shape for supporting an outer peripheral edge D1 of an optical disk D and is opened in a center portion thereof. This arrangement allows easy handling of the variety of disk pickers that handle the optical disk D, and makes the tray 3 lighter. Each of the trays 3 includes a concave portion 31 on which the optical disk D is settled. Further, as shown in FIG. 5, a bottom surface (seating surface) 31a of the concave portion 31 is formed in a slightly tapered shape in a direction deviating further away from the optical disk D as a position thereof shifts from the outer peripheral edge D1 of the optical disk D toward a center thereof. With this arrangement, a recording surface (incident surface of reproducing light) of the optical disk D does not make direct contact with the bottom surface 31a of the concave portion 31. As a result, even if the disk D is deformed, or the tray 3 is distorted when the disc picker performs chucking operation, the recording surface is not damaged.

One example of the dimensions of the tray 3 is described here. A thickness in a vertical direction of the tray 3 is 2.7 mm, a thickness of a flange portion 301 on an outer circumference is 1.7 mm. Further, an inner diameter of the concave portion 31 for storing the optical disk D having a diameter of 120 mm and a thickness of 1.2 mm is 121.4 mm, a depth thereof is 1.5 mm. Since the tray 3 is formed in a ring shape, an inner diameter thereof in an opening portion is 110 mm.

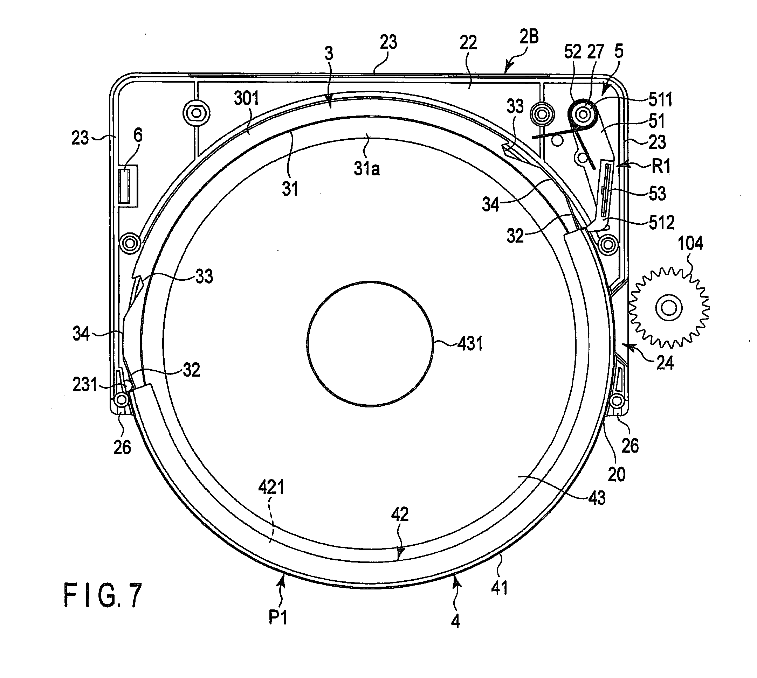

The shutter 4 is formed in at least a semicircular shape along the edges 212 and 222 of the circular shapes of the upper wall 21 and the lower wall 22, respectively. As shown in the plan view of FIG. 7, in this embodiment, the shutter 4 is slightly larger than a semicircle. Further, as shown in FIGS. 2 and 4, the shutter 4 includes a gear 411 on an outer peripheral wall 41, and shelves 421 on an inner peripheral wall 42 for individually supporting the trays 3. The gear 411 is formed along at least half a perimeter. Further, the shelves 421 are prepared in the number corresponding to the number of the trays 3 to be stored, and support the trays 3 along at least half a perimeter. A gap between the shelves 421 in a thickness direction of the optical disk D is about 1.9 mm, and the shelves 421 are provided at intervals of about 3.0 mm. Accordingly, there are gaps between the trays 3 respectively as the trays 3 are supported by the shelves 421 individually.

The shutter 4, as shown in FIG. 4, has a base plate 43 having a circular shape along a side of the lower wall 22. The base plate 43 has a rim 431 folded back toward the lower wall 22. The rim 431 is freely fit to an annular groove 223 formed in the lower wall 22. Further, as shown in FIG. 5, the shutter 4 has a sliding surface 44 projecting toward the lower wall 22. The sliding surface 44 is formed over substantially an entire length of the shutter 4 that is formed in a circular arc shape. Since the shutter 4 reduces a contact area configured with the rim 431 of the base plate 43 and the sliding surface 44, the rotational resistance between the lower wall 22 and the shutter 4 is reduced.

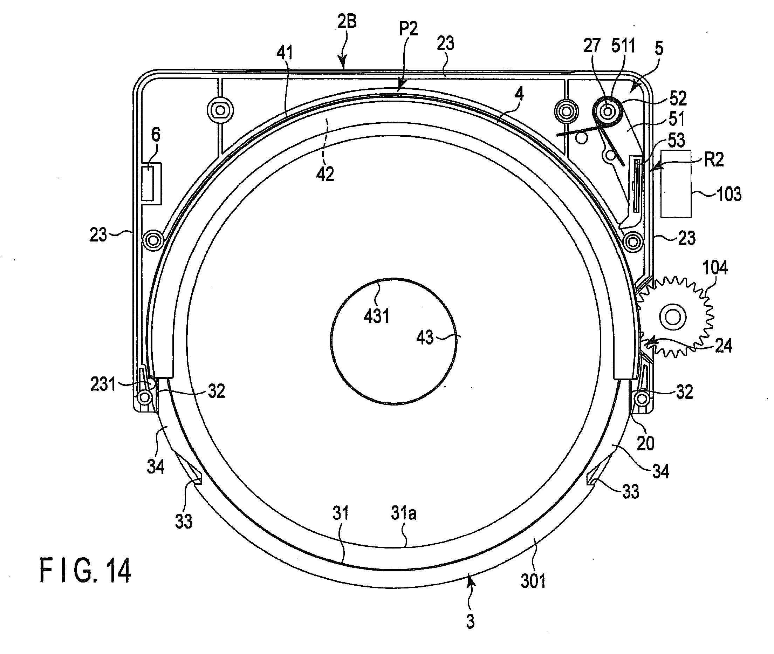

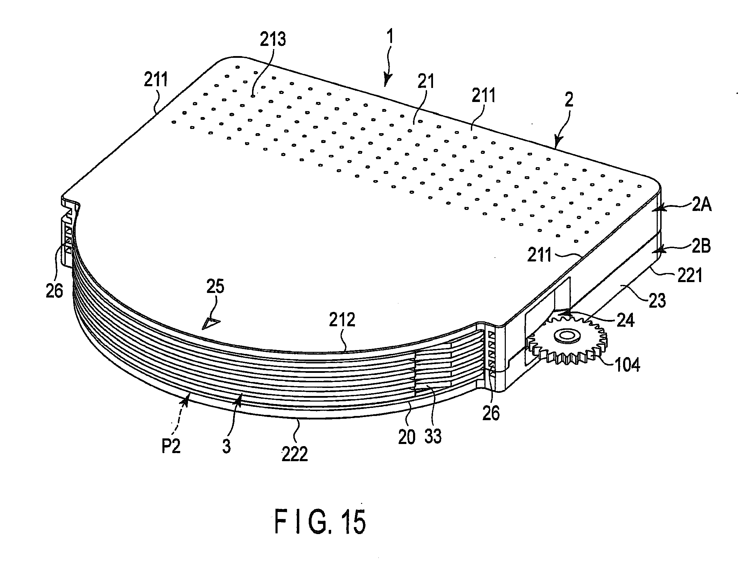

The shutter 4 rotates along the edges 212 and 222 of the circular shapes from a first position (closed position) P1 that closes the opening portion 20 between the edges 212 and 222 of the circular shapes of the upper wall 21 and the lower wall 22, respectively, as shown in FIG. 2 to a second position (opened position) P2 that opens the opening portion 20 between the edges 212 and 222 of the circular shapes, as shown in FIG. 14. The shutter 4 moves to the second position P2, so that the trays 3 stored inside the outer shell 2 are exposed, as shown in FIG 15.

As shown in FIGS. 7 and 14, the tray 3, while being held by the shelves 421, has a straight portion 32 that engages with the inner peripheral wall 42 of the shutter 4 in a rotational direction of the shutter 4. With this arrangement, the trays 3 rotate together with the shutter 4 from the first position P1 to the second position P2.

The outer shell 2 has a bay 24 which is opened in the side wall 23 for viewing the gear 411 formed on the outer peripheral wall 41 of the shutter 4. The bay 24 is arranged in a position in which a drive gear 104 prepared on a side of the changer apparatus 100 can be engaged while the shutter 4 moves from the first position P1 to the second position P2, and the position is a position in which operation required for pulling out the trays 3 from the cassette 1 is not disturbed.

In the case of this embodiment, the bay 24 opens in the side wall 23 of the outer shell 2, and is formed on a side of the lower shell 2B of the outer shell 2. The shutter 4 also blocks the bay 24. A stopper 231 against which the shutter 4 bumps while the shutter 4 is in the first position P1 and the second position P2 is provided inside the side wall 23 toward the opening portion 20 opposite to a side on which the bay 24 is provided.

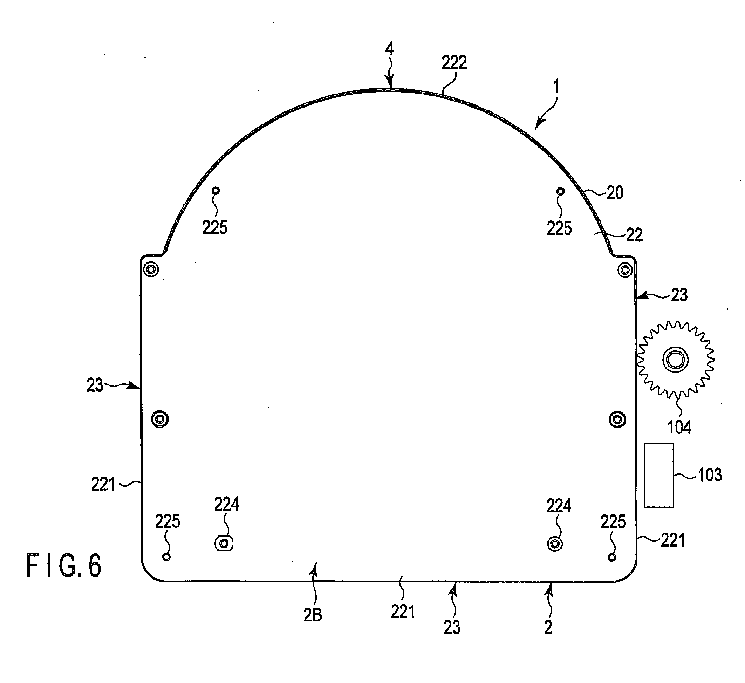

Further, the outer shell 2 has a first mark 25 indicating a direction for inserting the cassette 1 into the changer apparatus 100, as shown in FIGS. 1 and 2, at least two fitting holes 224 for fitting the cassette 1 to positioning pins inside the changer apparatus 100, as shown in FIG. 3, and four legs 225 protruding from the bottom surface, as shown in FIG. 6. In addition, a plurality of dents 213 serving as slip resistance during handling are formed on a surface of the upper wall 21 on a side away from the shutter 4. Further, the slip resistance may be formed not only on the upper wall 21, but also on the lower wall 22 or the side wall 23. As long as it functions as slip resistance, not only the round dents 213 but also bumps, grooves, a matting treatment, granulation treatment, or surface pattern may be applied.

In the case of this embodiment, the first mark 25 is arranged substantially in a center portion of the edge 212 of the circular shape of the upper wall 21. In addition, when the fitting holes 224 fit to the positioning pins, the outer shell 2 of the cassette 1 is positioned in a rotational direction with respect to a center axis around which the shutter 4 rotates inside the changer apparatus 100 into which the cassette 1 is inserted.

Further, it is also assumed to use a plurality of cassettes 1 while they are stacked together. In such a case, since the cassette 1 has the legs 225 as shown in FIG. 6, the lower wall 22 of the cassette 1 stacked above does not make direct contact with the upper wall 21 of the cassette 1 stacked there below. Even if the upper wall 21 or the lower wall 22 is distorted, this arrangement prevents making surface-to-surface contact and becoming unstable. The outer shell 2 is formed of a material, for example, polycarbonate, which is resistant to drop impact and flaws. Further, the tray 3 and the shutter 4 are formed of a material, for example, POMP (placental resin), which is resistant to wear.

In addition, when the shutter 4 is in the first position P1, the shutter 4 has a second mark 45 in a position coinciding with the first mark 25. Accordingly, by checking that the second mark 45 coincides with the first mark 25, it is possible to confirm that the shutter 4 is in the first position P1, i.e., the state in which the opening portion 20 of the outer shell 2 is closed.

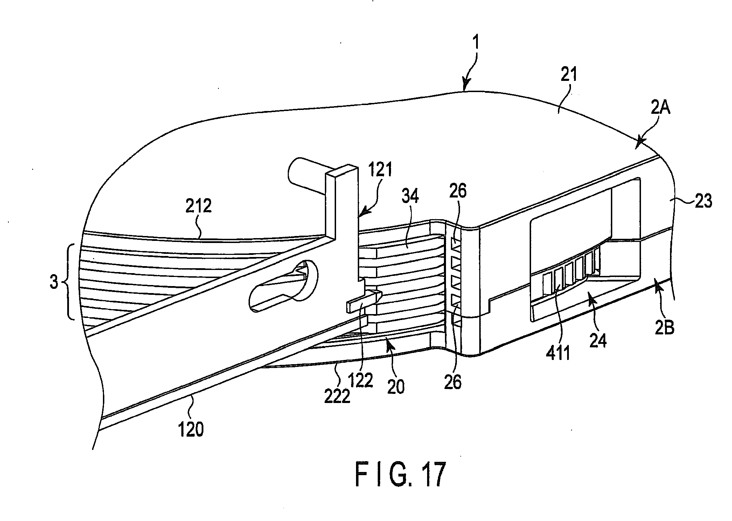

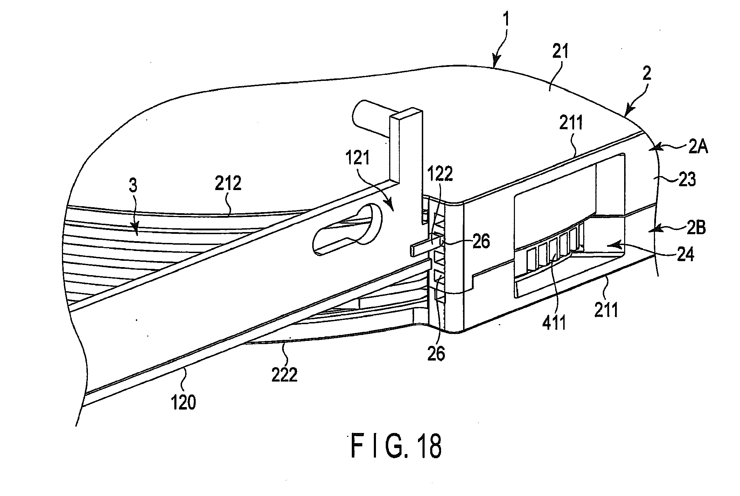

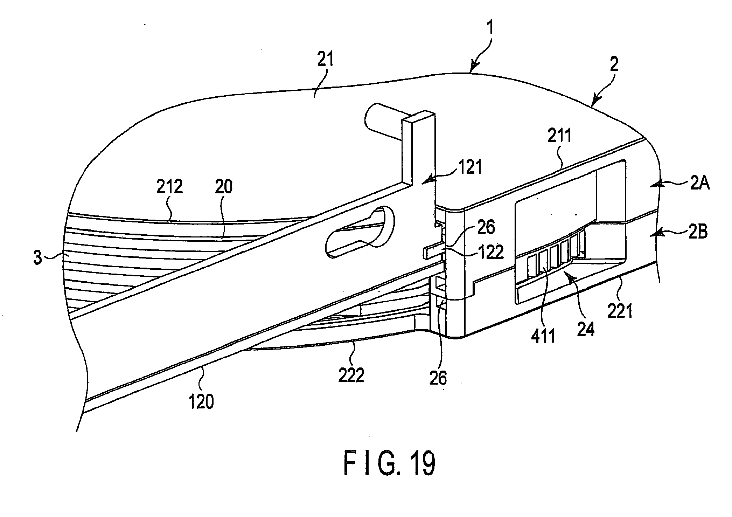

The outer shell 2 has a guide hole 26 in the side wall 23 adjacent to end portions of both the edges 212 and 222 of the circular shapes of the upper wall 21 and the lower wall 22, respectively. The guide hole 26 is used to position the guide rail 120 in a manner corresponding to the arrangement of a desired piece of the trays 3, when the changer apparatus 100 pulls out the tray 3 from the cassette 1 that is loaded in the changer apparatus 100. As shown in FIG. 17, the guide rail 120 has a fitting pin 122 at a tip 121 thereof. As shown in FIGS. 18 and 19, the fitting pin 122 is inserted into the guide hole 26. In this embodiment, five of the guide holes 26 are prepared according to the number of the trays 3.

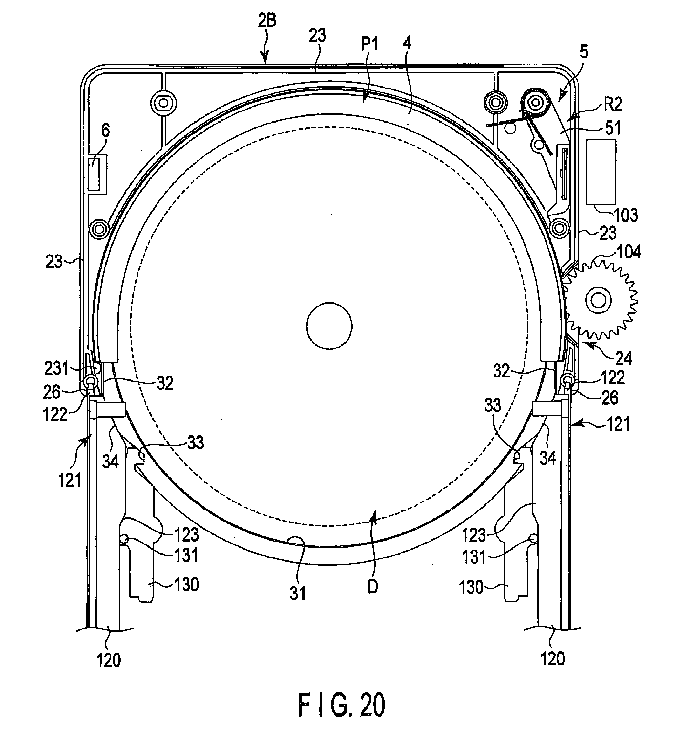

When the trays 3 rotate to the second position P2 together with the shutter 4, each of the trays 3 has a notch 33 which engages with a hook 130 which is extended from the changer apparatus 100. In this embodiment, as shown in FIG. 20, two of the notches 33 are arranged and chucked from two outer sides by the hook 130 that rotates in a plane parallel with the recording surface of the optical disk D placed in the tray 3. Further, the tray 3 has a tab 34 that runs on the tip 121 of the guide rail 120 inserted into the guide hole 26 while the tray 3 rotates to the second position P2 together with the shutter 4. With this tab 34, the tray 3 can smoothly move between the shelves 421 of the shutter 4 and the guide rail 120.

As shown in FIGS. 7 to 9, the lock mechanism 5 is arranged in a range enclosed by the outer shell 2, that is, between the side wall 23 of the outer shell 2 and a cylindrical surface along the outer peripheral wall 41 of the shutter 4, specifically, between the side wall 23 and shutter 4 positioned in the second position P2. The lock mechanism 5 is held by an elastic force in an engaging position R1 in which the shutter 4 is engaged in the first position P1 in the case where the shutter 4 stays in the first position P1. Further, the lock mechanism 5 is held in a release position R2 away from the shutter 4 by a magnetic force applied from outside of the outer shell 2.

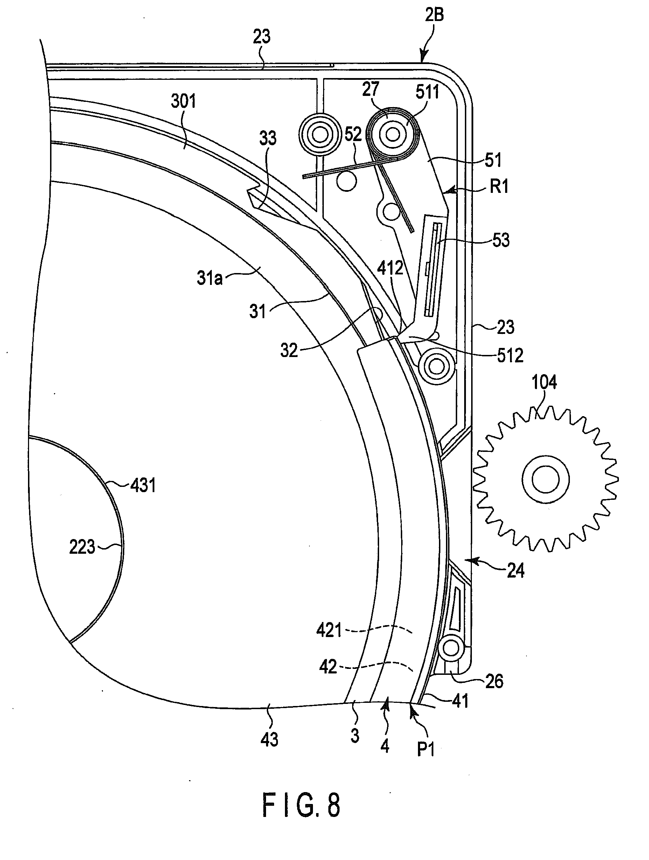

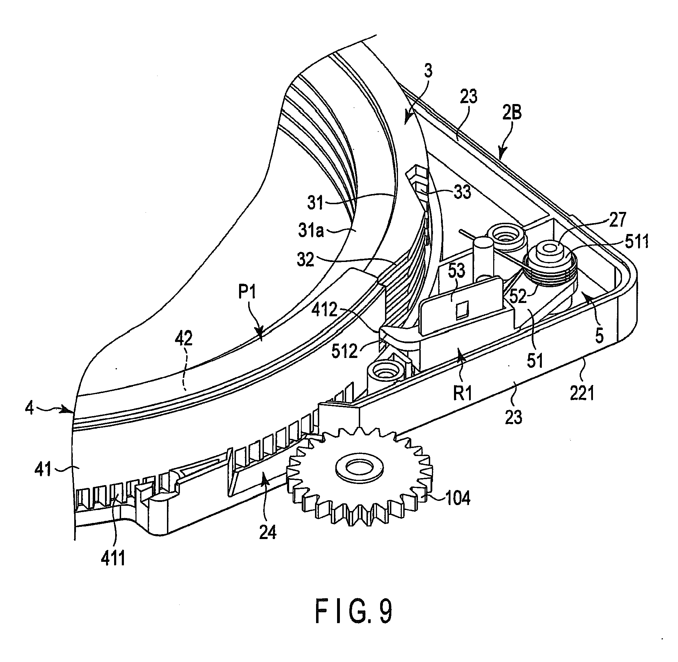

In this embodiment, the lock mechanism 5 includes an arm 51, an elastic member 52, and a release member 53. As shown in FIGS. 8 and 9, the arm 51 is rotatable supported at a base portion 511 thereof by a boss 27 provided inside the outer shell 2, and a tip 512 thereof rotates closer to or away from the outer peripheral wall 41 of the shutter 4. The tip 512 of the arm 51 as a detent is engaged with an engaging notch portion 412 formed in the outer peripheral wall 41 of the shutter 4. The elastic member 52 is a helical torsion coil spring, and generates an elastic force for pressing the tip 512 of the arm 51 toward the outer peripheral wall 41 of the shutter 4. The release member 53 is formed of a member that is attracted by the magnetic force, i.e., magnetic material, preferably, ferromagnetic such as an iron plate, and is attached to the arm 51.

The elastic member 52 may be a formed wire spring, a compression spring, a tension spring, blade spring, or an elastomeric such as an elastomeric resin or rubber instead of the helical torsion coil spring, or may be formed of a resin integrally with the arm 51. In addition, as shown in FIG. 4, the release member 53 may be separately produced and fitted to the arm 51, or the arm 51 itself may be formed of ferromagnetic. Further, the lock mechanism 5 may be a movable member that is linearly biased toward the shutter 4 by the elastic member 52, instead of the arm 51 that rotates.

Further, the cassette 1 includes an RID (Radio Frequency Identification) 6. As shown in FIG. 4, the RID 6 is incorporated in the outer shell 2. The RID 6 stores therein identification information relating to the cassette 1 and identification information relating to the optical disk D, and may store information relating to a type of the optical disk D. The identification information includes a number specific to the optical disk D such as a manufacturing lot number or a serial number of the cassette 1.

Further, by including information relating to the type of the optical disk D, a work involved in checking a wavelength suitable for the optical disk D can be eliminated. This means that a time required for initial operation when the optical disk D is accessed can be shortened.

A description will be given of operation for removing the optical disk D from the cassette 1 that is configured as described above. The cassette 1, while it is inserted into the changer apparatus 100, is in a state in which the opening portion 20 of the outer shell 2 is closed by the shutter 4 as shown in FIGS. 2 and 7, and the shutter 4 is locked in the first position P1 by the lock mechanism 5 that is held in an engaging position R1 as shown in FIGS. 8 and 9.

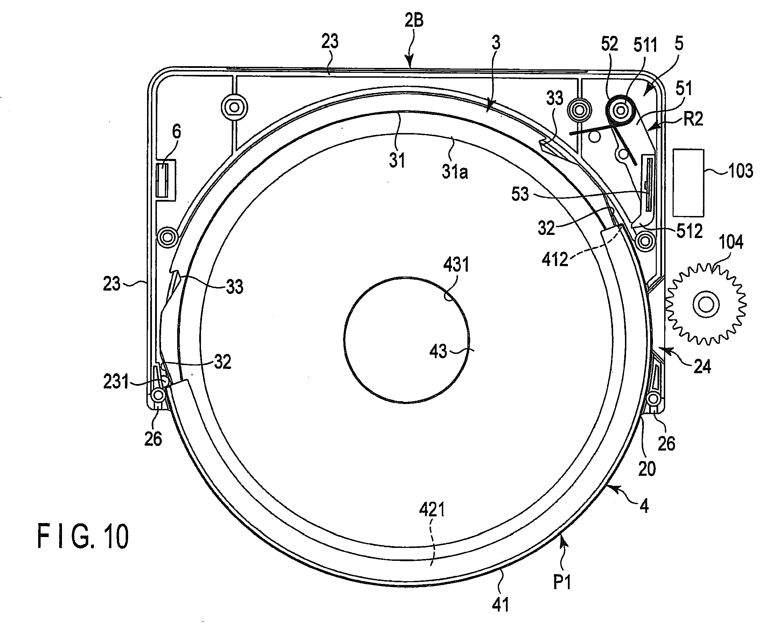

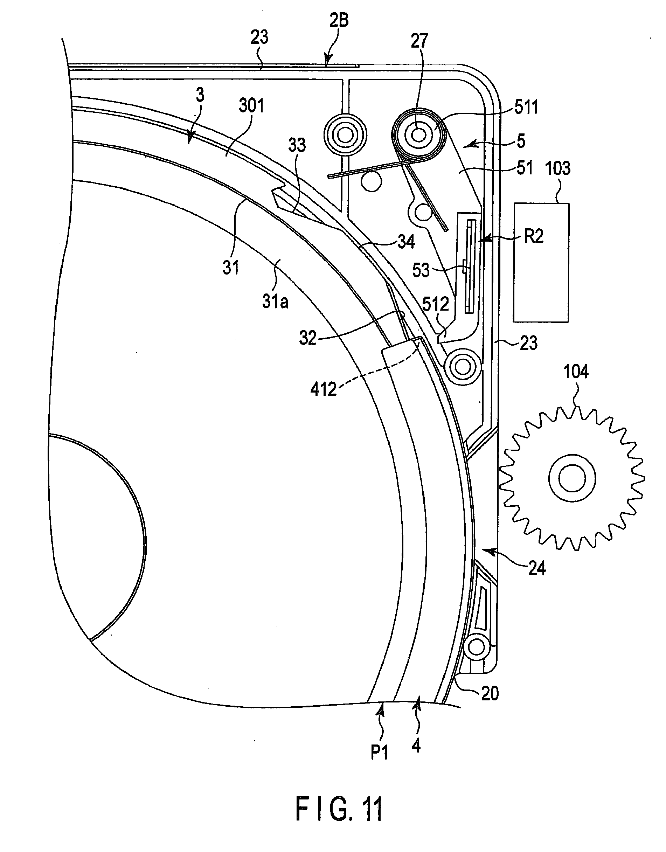

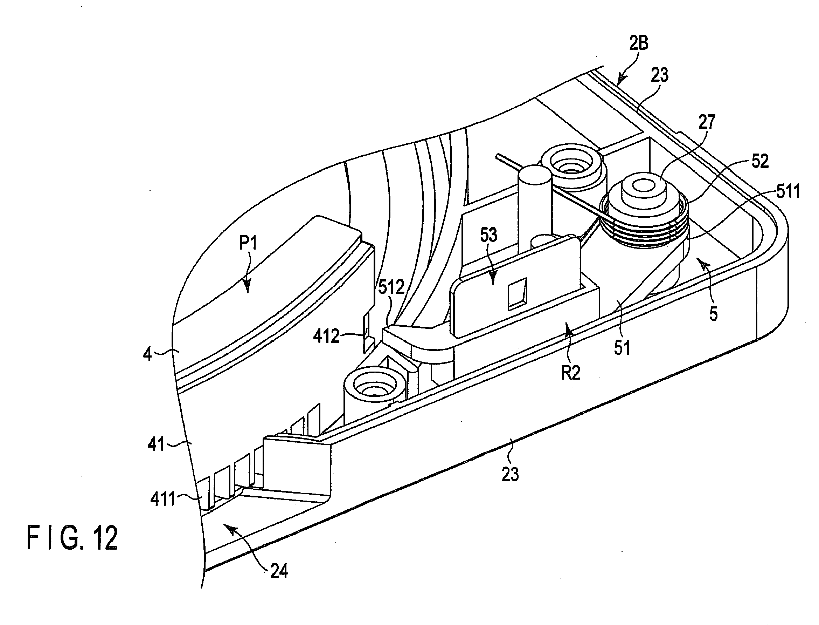

When the lock mechanism 5 is released, a magnet 103 is brought closer to the release member 53 from outside of the side wall 23 of the outer shell 2, as shown in FIG. 10. Since the release member 53 is formed of an iron-based metallic material such as an iron plate, the arm 51 of the lock mechanism 5 is held in a release position R2 by applying a magnetic force that works against a biasing force of the elastic member 52, as shown in FIGS. 11 and 12. The tip 512 of the arm 51 disengages from the engaging notch portion 412 of the shutter 4, and the shutter 4 is put into a rotatable state. The magnet 103 may be a permanent magnet made of a neodymium material or an electromagnet in which a magnetic force is generated by a solenoid coil. It serves the purpose if the front end 512 of the arm 51 is disengaged from the engaging notch portion 412 by moving the permanent magnet 103 closer or increasing the magnetic force so that the arm 51 is pulled against the biasing force of the elastic member 52.

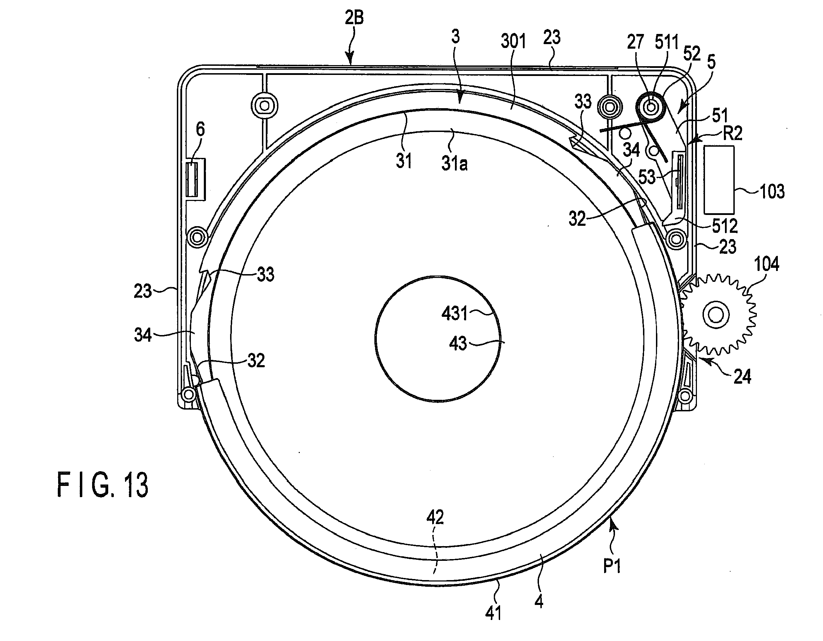

When the lock mechanism 5 is disengaged, next, the drive gear 104 that is positioned outside the bay 24 as shown in FIG. 10 is brought into the bay 24 as shown in FIG 13 for engagement with the gear 411 of the shutter 4. When the drive gear 104 is rotated clockwise when the cassette 1 is viewed from a side of the upper wall 21, the shutter 4 is rotated counterclockwise and stored in the outer shell 2, and the opening portion 20 of the outer shell 2 is opened, as shown in FIGS. 14 and 15.

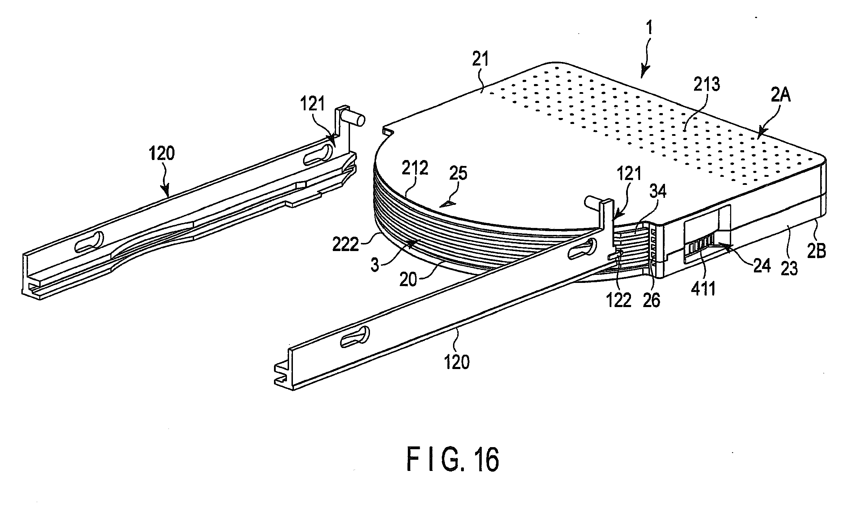

As shown in FIG. 16, when the shutter 4 is released, the pair of guide rails 120 provided in the changer apparatus 100 extends toward the cassette 1. The guide rail 120 inserts the fitting pin 122 into the guide hole 26, among the guide holes 26 located at both ends of the opening portion 20, which corresponds to a position of the tray storing therein an optical disk to be removed.

In FIGS. 17 to 19, the guide rail 120 is extended aiming at the tray 3 positioned in the second tier from the top. FIG. 17 shows a state before the guide rail 120 is inserted into the guide hole 26, and FIG. 18 shows a state in which a tip of the fitting pin 122 of the guide rail 120 is slightly inserted into the guide hole 26. The tip of the fitting pin 122 is subjected to chamfering so that it is tapered to be thinner toward the tip, and is formed into a quadrangular trapezoid shape. Accordingly, even if there is a deviation of about 1 mm in the positions of the guide rail 120 and the cassette 1, the fitting pin 122 is correctly positioned by following the guide hole 26, as shown in FIG. 19.

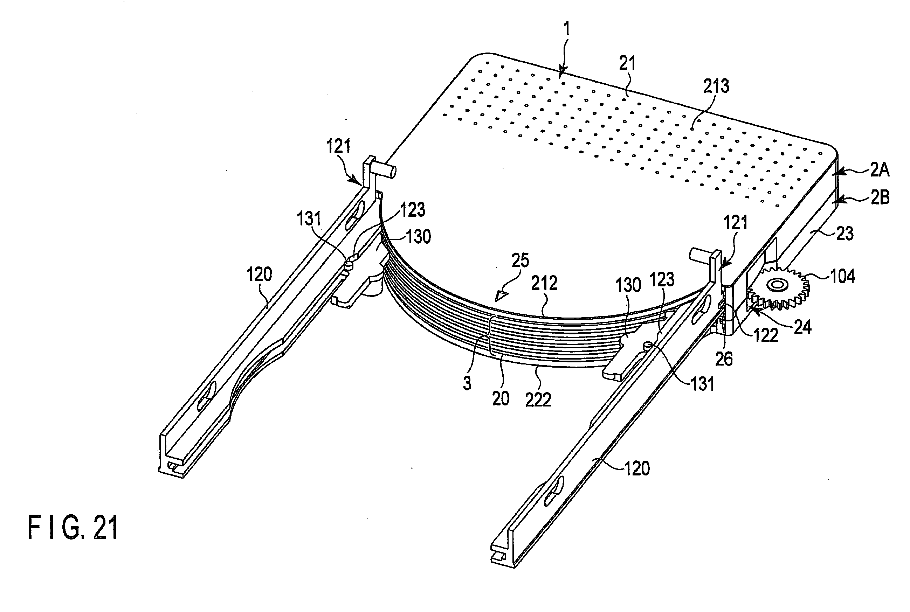

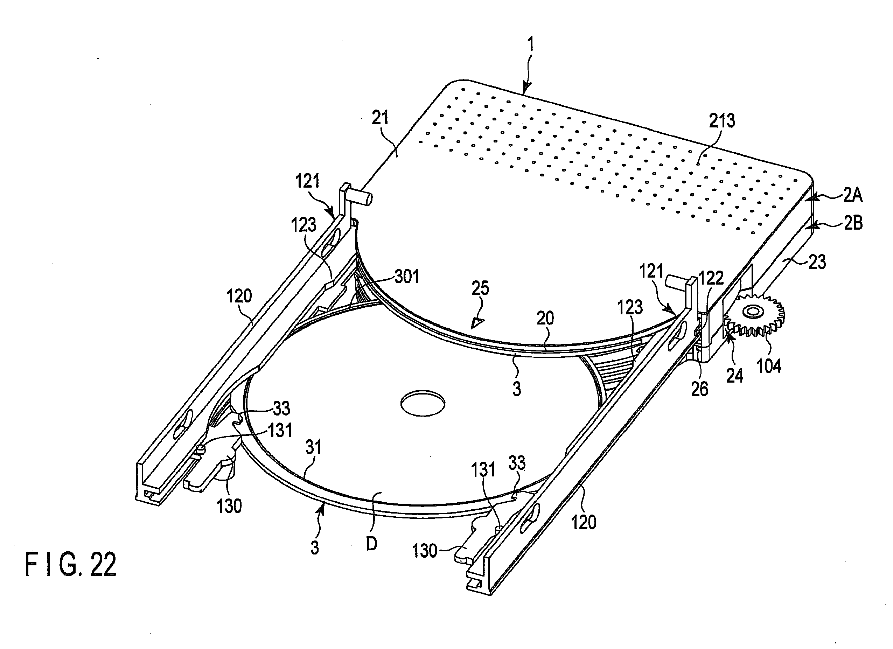

When the guide rail 120 is connected to the cassette 1, then, a pair of hooks 130 of a tray picker is engaged with the notches 33 as shown in FIG. 20. In this embodiment, a tip of the hook 130 expands outwardly when the hook 130 is pressed against the tray 3, and rotates and engages with the notch 33. As shown in FIG. 21, the hook 130 is engaged with the tray 3 to be removed, and, as shown in FIG. 22, the tray 3 thus engaged is pulled out when the hook 130 moves backward. It is preferable that the sliding components such as the tray 3, the guide rail 120, and the shutter 4 be formed of a material excellent in a sliding characteristic having a small coefficient of friction and wear resistance, for example, POMP (placental resin), so as not to raise a dust.

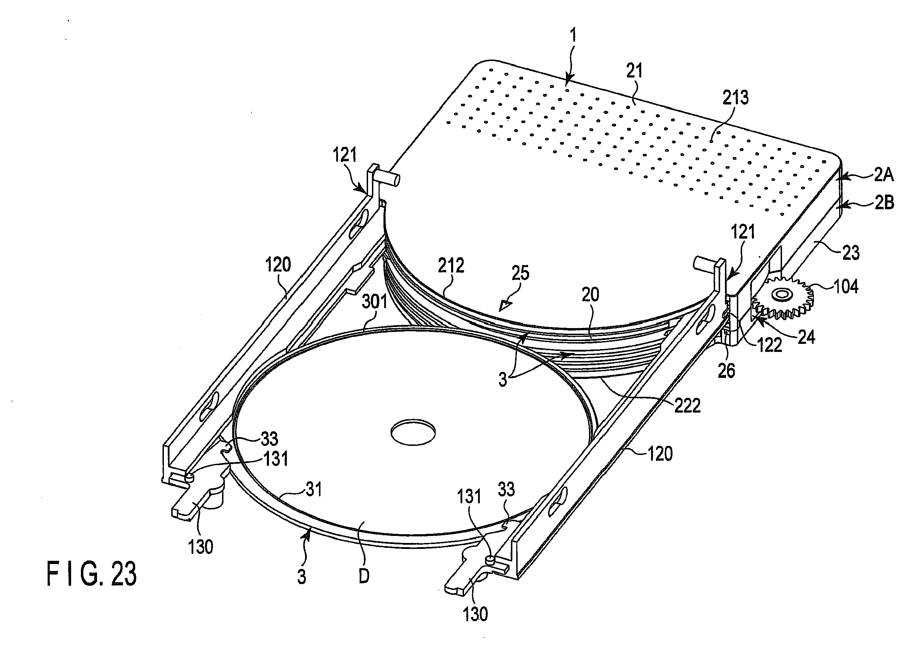

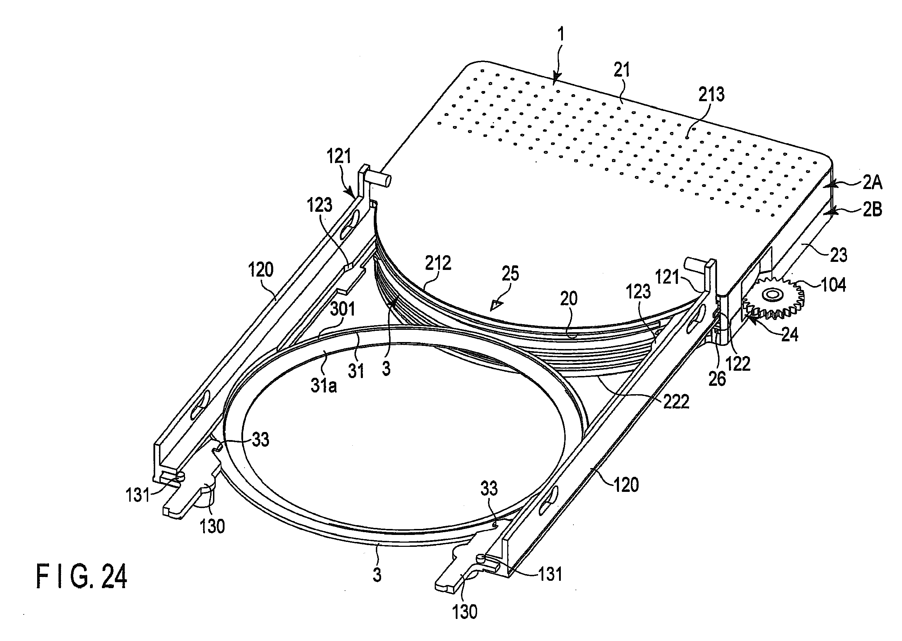

As shown in FIG. 21, the guide rail 120 has a notch in a circular arc shape midway. The notch is provided for lifting only the optical disk D while leaving the tray 3 as it is when the optical disk D is picked up in a thickness direction thereof by a disk picker. The tray 3 is removed up to a position shown in FIG. 23, and the optical disk D is taken out upward by the disk picker as shown in FIG. 24.

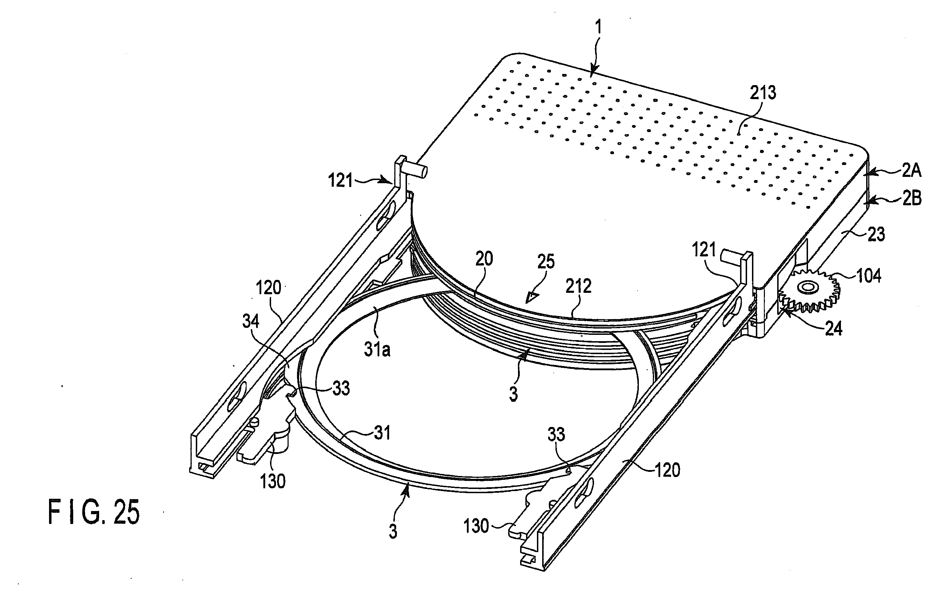

The tray 3 which is empty after the optical disk D is took out is pushed back toward the cassette 1 by the hook 130 of the tray picker as shown in FIG. 25. When the guide rail 120 is pulled away from the cassette 1 preceding the hook 130 which is in the same state as shown in FIG. 21 in which the tray 3 is accommodated in the cassette 1, a projection 131 provided to the hook 130 is pushed by a cam 123 provided at the tip 121 of the guide rail 120, and the hook 130 is disengaged from the notch 33 of the tray.

The optical disk D which is held by the disk picker is lowered onto the tray 111 of the disk drive 110 which is thrown out, chucking is disengaged, and the optical disk D is released from the disk picker. Upon completion of mounting the optical disk D from the cassette 1 to the disk drive 110, the tray 111 of the disk drive 110 is pulled in, and reading or writing of the optical disk D starts. A series of operation shown in FIGS. 16 to 25 and described above in relation thereto is repeated, and the other four optical disks D are individually loaded in the disk drives 110.

A procedure for collecting the optical disk D loaded in each of the disk drives 110 into the cassette 1 will be described. A process (unmeant) for taking out each of the optical disks D from the disk drive 110 is performed. The tray 111 of the disk drive 110 is ejected out, and the optical disk D is chucked by the disk picker to take it out from the tray 111. The guide rail 120 is engaged and fastened to the guide hole 26 of the cassette 1. The tray 3 which is empty is caught by the hook 130 of the tray picker and is pulled out.

The optical disk D which has been taken out by the disk picker is mounted on the tray 3, and the optical disk D is disengaged from the disk picker. The disk picker is retreated above the tray 3 that is pulled out. The tray 3 is pushed back by the hook 130 of the tray picker, and the hook 130 is disengaged from the tray 3 by detaching the guide rail 120 from the cassette 1 prior to the hook 130. This operation is repeated for each of five optical disks D.

When all of the optical disks D are put back to the cassette 1, the drive gear 104 that is engaged with the gear of the shutter 4 in the bay 24 is rotated counterclockwise, and the shutter 4 in the second position P2 is put back to the closed position which is the first position P1. The magnet 103 that holds the lock mechanism 5 in the release position R2 is moved away from the cassette 1 or an output of the electromagnet thereof is reduced. To state it differently, by reducing the magnetic flux density, the arm 51 is returned to the engaging position R1 by the biasing force of the elastic member 52, and the shutter 4 is locked. The cassette 1 in which the shutter 4 is locked is ejected through the slot 101 of the changer apparatus 100.

The positions of the first mark 25 and the second mark 45 may be checked to see whether the shutter 4 of the cassette 1 that is ejected from the changer apparatus 100 is completely closed or not. The shutter 4 is completely closed, when the positions of the first mark 25 and the second mark 45 coincide with each other in a rotational direction of the shutter 4. This means that, if the positions of the first mark 25 and the second mark 45 do not coincide with each other, the shutter 4 is not closed. In such a case, when the shutter 4 is rotated manually so that the second mark 45 coincides with the first mark 25, the lock mechanism 5 operates, and the shutter 4 is locked in the first position P1. Although the first mark 25 and the second mark 45 are located in a center portion of the edge 212 of the circular shape of the upper wall 21, they may be located in a place other than this.

When the cassette 1 is loaded, the changer apparatus 100 reads, from the RID 6 incorporated in the outer shell 2, an ID of the cassette 1 and an ID or the like of the optical disk D which is a medium stored in the cassette 1. In this case, the RID 6 stores therein types of the optical disks D stored in the cassette 1, ID information of the five optical disks D, ID information of the cassette 1, barcode information, and the like. The information about the types of the optical disks D is provided for the disk drive 110 into which the optical disks D are inserted. By referring to this kind of information, it makes changer apparatus 100 omits checking operation to directly read the types of the optical disks D from which are inserted.

In general, in an optical multi-disk drive, information is recorded on the optical disk D and reproduced (readout) using a near infrared laser (e.g., λ = 780 nm) for a CD, a red light (e.g., λ = 635 nm) laser for a DVD, and a purple light (e.g., λ = 405 nm) laser for a BD (Blue-ray Disc). In the case there is no information, in advance, as to which type of disk is inserted, it is necessary to emit lasers having wavelengths of near infrared light, red light, and purple light sequentially to an optical disk, and to determine the type of the disk by detecting reproduction of a signal. When the information about the type of the optical disk is provided from the RID, it is possible, based thereon, to immediately read or write information by emitting a laser compatible with the inserted disk.

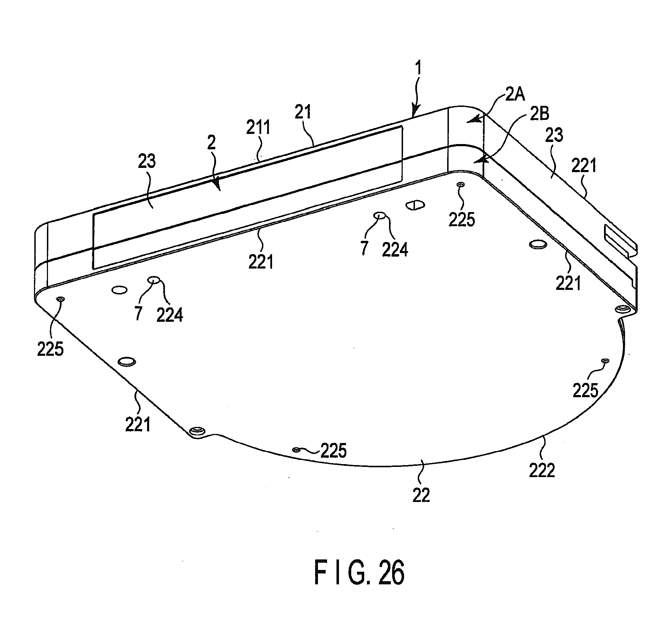

A cassette 1 according to a second embodiment will be described with reference to FIGS. 26 to 31. A component having the same function as the cassette 1 of the first embodiment will be identified, in the drawings, with the same reference symbol as the component of the first embodiment, and the detailed description thereof will be referred to that of the first embodiment. Further, the components unillustrated in FIGS. 26 to 31 are the same as those of cassette 1 of the first embodiment.

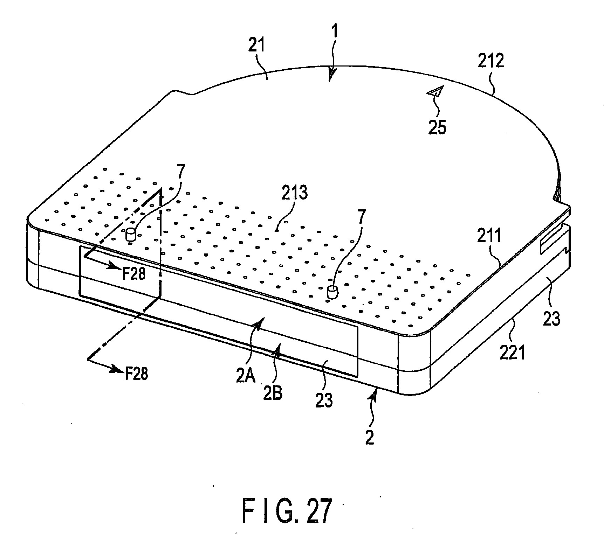

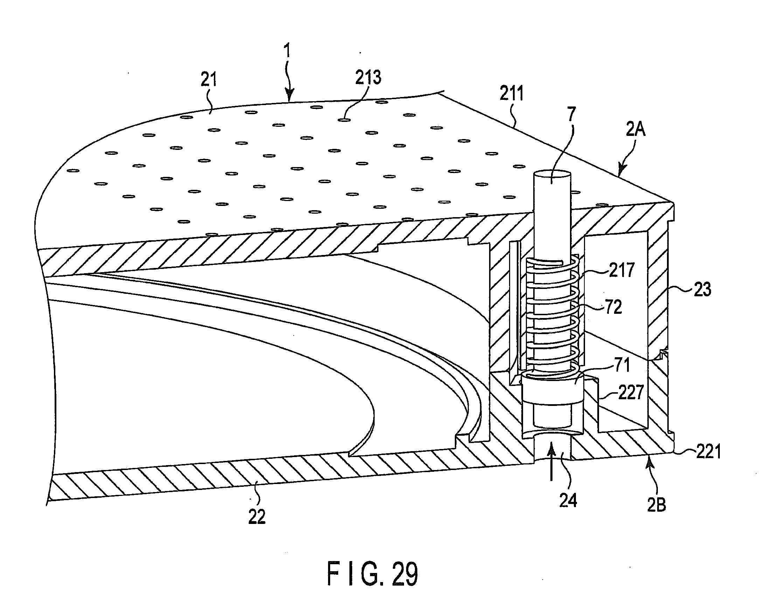

A cassette 1 shown in FIG. 26 has at least two fitting holes 224 for positioning in a direction of rotation with respect to a center axis around which a shutter 4 rotates when the cassette 1 is inserted into a changer apparatus 100, and also has a rod 7 penetrating from an upper wall 21 to a lower wall 22 in each of the fitting holes 224, as shown in FIGS. 27, 28, and 29. The rod 7 is disposed within a range inside a side wall 23 of an outer shell 2 and outside a cylindrical surface along an outer peripheral wall 41 of the shutter 4, and is formed flush with outer surfaces of the upper wall 21 and the lower wall 22. FIGS. 27 and 29 show the rods 7 as in the case where the cassette 1 is loaded in the changer apparatus 100, and positioning pins provided on a side of the changer apparatus 100 are fitted in the fitting holes 224.

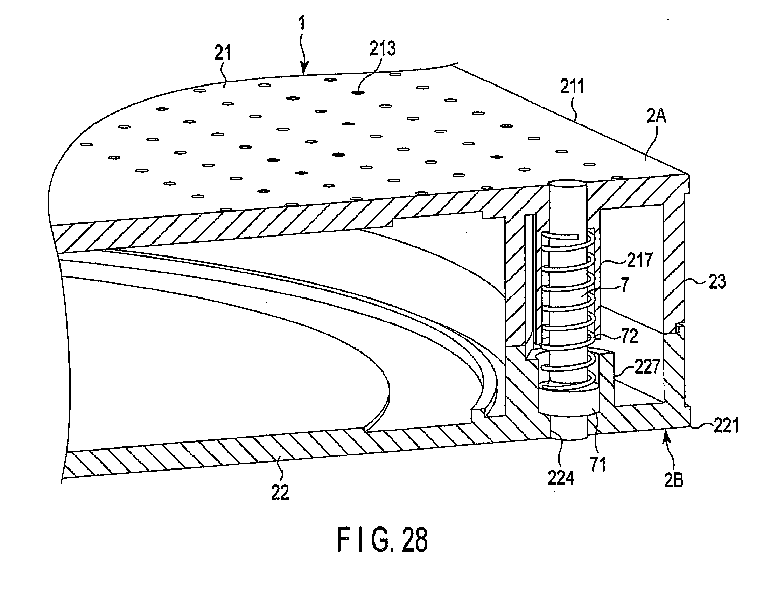

As shown in FIGS. 28 and 29, the rod 7 has a flange 71 and a coil spring 72, and is inserted into guide sleeves 217 and 227 which are integrally formed with the upper wall 21 and the lower wall 22. The flange 71 functions as holding a position of the rod 7 with respect to the lower wall 22, and as a stopper of the coil spring 72. As shown in FIGS. 26 and 28, the rod 7 is held in a state flush with the upper wall 21 and the lower wall 22 while the changer apparatus 100 is not loaded with the cassette 1, i.e., while the positioning pins are not inserted into the fitting holes 224. Then, as shown in FIGS. 27 and 29, the rod 7 is pushed out toward a side of the upper wall 21 by the positioning pin in the state in which the changer apparatus 100 is loaded with the cassette 1, i.e., when the positioning pin is inserted into the fitting hole 224.

Accordingly, the cassette 1 can be firmly held, when a receiving hole into which the rod 7 is inserted is provided in a position opposing the positioning pin in a portion where the cassette 1 is loaded in the changer apparatus 100. Further, it is possible to check that the cassette 1 is correctly loaded, when a sensor is provided in the receiving hole. In addition, since the rod 7 is structured to project toward a side of the upper wall 21, it is possible to easily determine the case where the cassette 1 is loaded upside down by mistake in the changer apparatus 100.

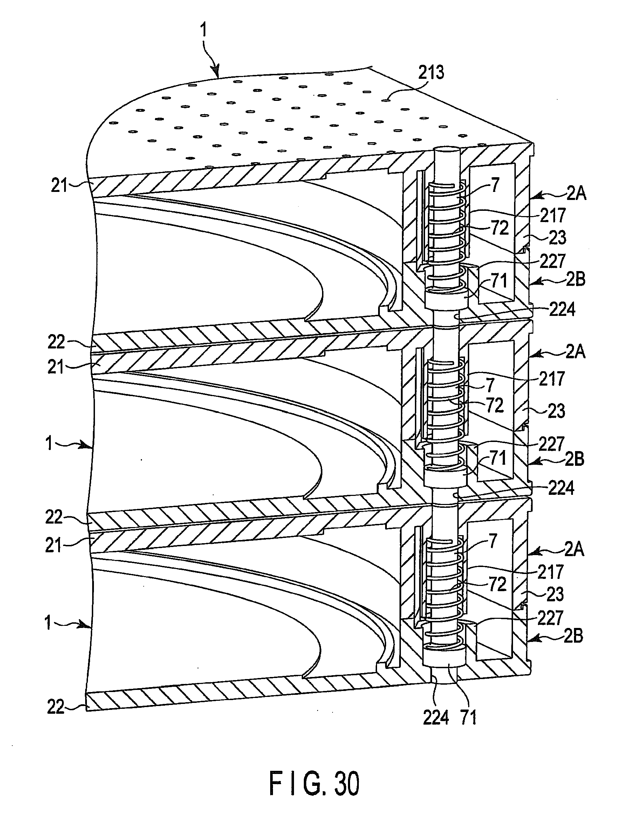

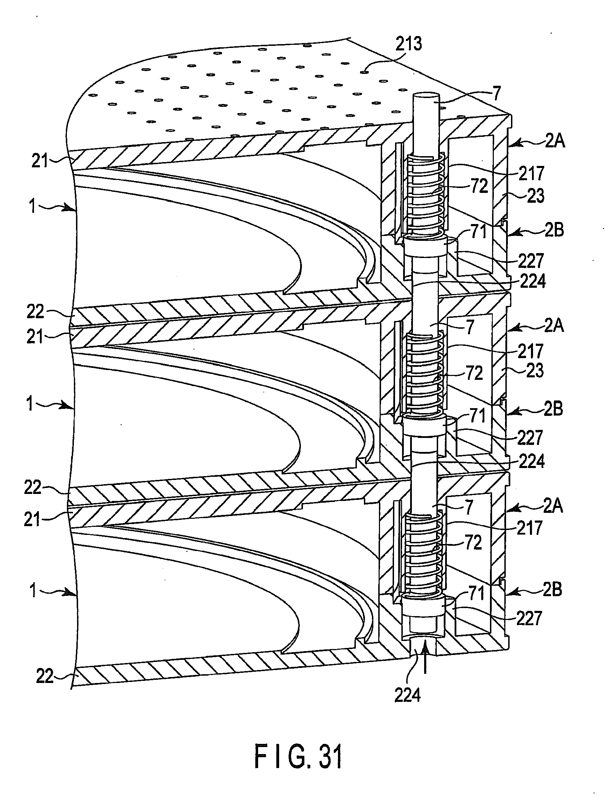

Furthermore, the rod 7 effectively functions when the plurality of cassettes 1 are stacked together and loaded in the changer apparatus 100. FIG. 30 shows a state in which the cassettes 1 with the rods 7 are stacked together, and FIG. 31 shows a state in which the cassettes 1 that are stacked together are loaded in the changer apparatus 100. In FIGS. 30 and 31, the cassettes 1 are stacked in three tiers. When the positioning pin of the changer apparatus 100 is inserted into the fitting hole 224 of the cassette 1 located in the bottom, the rods 7 of each cassettes 1 are pushed up together by interlocking and is inserted into the fitting hole 224 of the cassette 1 one tier above. This means that the rod 7 of the cassette 1 one tier below functions like a positioning pin of the cassette 1 one tier above. In the case where the plurality of cassettes 1 are stacked together, an end portion of the rod 7 on a side of the lower wall 22 may be projected by a length of a leg 225 so that a cumulative length of the rods 7 does not become insufficient for the amount of the leg 225 provided to the lower wall 22.

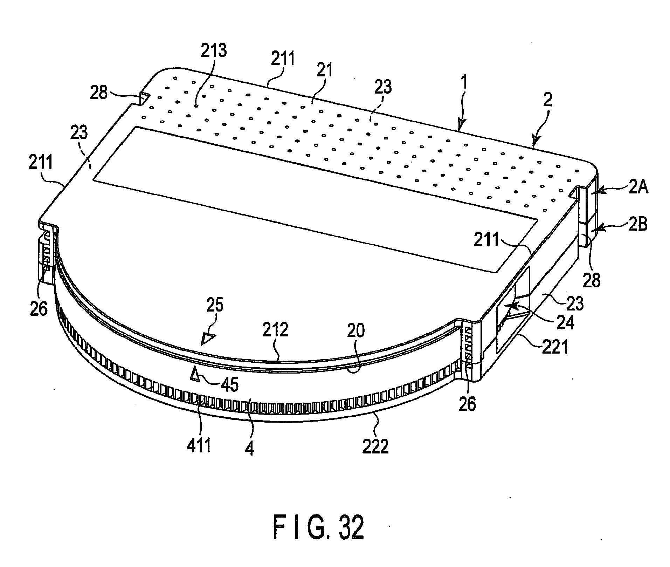

A cassette 1 according to a third embodiment will be described with reference to FIGS. 32 to 35. Components having the same function as the cassette 1 of the first embodiment or the cassette 1 of the second embodiment will be identified, in the drawings, with the same reference symbols as the components of the cassette 1 according to the first embodiment or the cassette 1 according to the second embodiment, and the detailed description thereof will be referred to that of the first embodiment. Further, the components unillustrated in FIGS. 32 to 35 are the same as those of cassette 1 of the first embodiment or the cassette 1 of the second embodiment.

A cassette 1 shown in FIG. 32 has a recessed portion 28 on a side wall 23 along a direction in which the cassette 1 is inserted into a changer apparatus 100. The recessed portion 28 continues from an upper wall 21 to a lower wall 22 along a thickness direction of the cassette 1, i.e., a thickness direction of an optical disk stored in the cassette 1. The recessed portion 28 is used for connecting the cassettes 1 together when the cassettes 1 are stacked together in a plurality of tiers and are loaded in the changer apparatus 100.

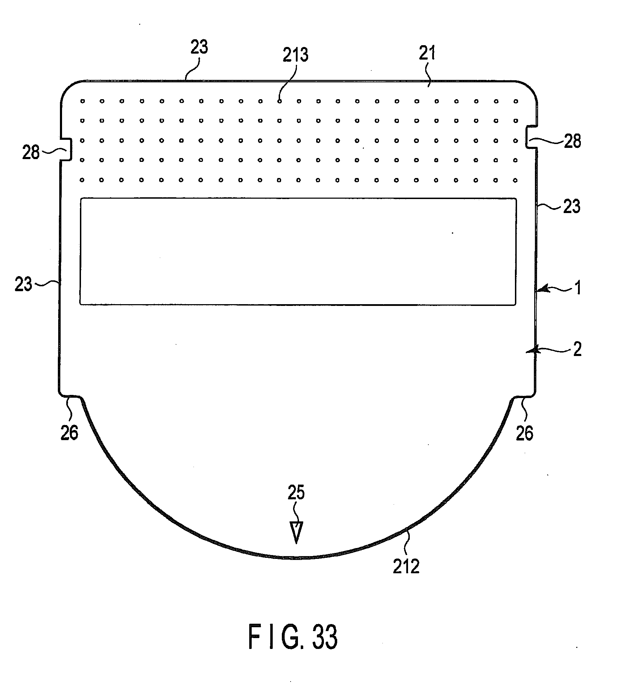

As shown in FIG. 33, positions of the recessed portions 28 are arranged asymmetrically with respect to a first mark 25 provided on the upper wall 21, so that directions of the cassettes 1 are set in one direction when the plurality of cassettes 1 are stacked. In addition to the asymmetrical arrangement of the recessed portions 28, the shapes or the number of recessed portions 28 may be altered.

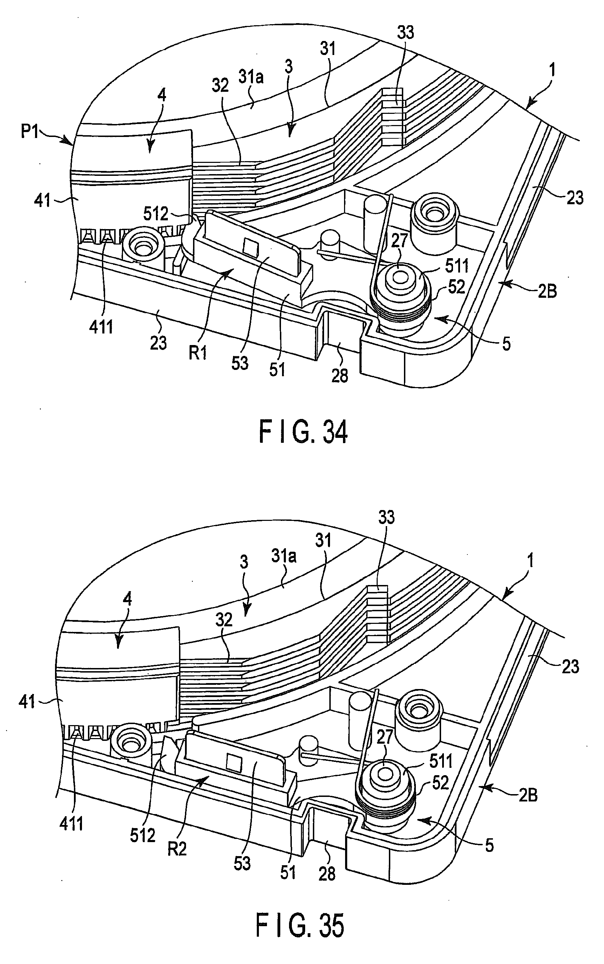

Further, the cassette 1 according to the third embodiment has a structure of a lock mechanism 5 which is different from that of the first embodiment and the second embodiment. As shown in FIGS. 34 and 35, the lock mechanism 5 of the cassette 1 is arranged so that a tip 512 of an arm 51 engages as a detent with a gear 411 provided on an outer peripheral wall 41 of the shutter 4. FIG. 34 shows the lock mechanism 5 in an engaging position R1 in which the arm 51 is pressed toward a side of a shutter 4 by an elastic member 52, and FIG. 35 shows the lock mechanism 5 in a release position R2 in which the arm 51 is attracted toward a side of the side wall 23 by a release member 53 arranged outside a side wall 23 (by a magnetic force such as a permanent magnet).

The lock mechanism 5 in the third embodiment, the tip 512 of the arm 51 engages with the gear 411. Accordingly, it can lock not only the shutter 4 in a first position P1 but also the shutter 4 that is incompletely closed. The tip 512 of the arm 51 engages with the gear 411 like a ratchet so that the shutter 4 closes by itself if a user applies a force to the shutter 4 in the case where the shutter 4 is incompletely closed.

Although the shutter 4 can be moved in a closing direction, it is locked by the lock mechanism 5 so as not to be moved in an opening direction. A boss 27 that supports a base portion 511 of the arm 51 is arranged closer to the side wall 23 than in the cases of the first and second embodiments, so that a force of constraint in an opening direction of the shutter 4 is enhanced. In other words, in the case where the shutter 4 is rotated in the opening direction of the shutter 4, the tip 512 of the arm 51 is structured to be deeply engaged into the gear 411 with respect to a tooth flank thereof. The gear 411 is formed substantially from one end to the other to drive the shutter 4. As a result, in any position in which the shutter 4 is incompletely closed, the shutter 4 is locked by the lock mechanism 5 so that the shutter 4 does not open further.

Since the cassettes 1 according to the first embodiment and the second embodiment are sealed types including the shutters 4, the cassettes 1 prevent a disk D from gathering dusts, and eliminate a cause for generating errors in data to be recorded on the optical disk D. The cassette 1 can be removed from the changer apparatus 100 and stored.

External dimensions of any of the cassettes 1 are not changed, i.e., occupied volume thereof are not changed, when the shutter 4 is opened. In addition, a half of the cassette 1 is formed of a circular shape larger than a circular optical disk by one size and the rest thereof has a square external shape. Accordingly, a mechanism for handling the cassette 1 in an apparatus using the cassette 1 can be reduced in size, which increases a freedom of mechanism design of the apparatus.

The cassette 1 stores the optical disk D one by one by means of a tray 3. However, the cassette 1 is not provided with a guide rail required for drawing out the tray 3 from the cassette 1. The cassette 1 is made lighter by incorporating a minimal function and structure as the cassette 1. Then, the cassette 1 has a guide hole 26 into which a fitting pin 122 provided at a tip 121 of a guide rail 120 is fitted so that positioning of the guide rail 120 provided in the changer apparatus 100 is simplified. Since the fitting pin 122 is inserted into the guide hole 26 of the cassette 1, the tip 121 of the guide rail 120 does not deviate when the tray 3 is drawn out. It is possible to decrease the rigidity of and simplify a mechanism of the changer apparatus 100 relating to the guide rail 120. Further, a time required for setting the cassette 1 can be reduced. As a result, by employing the above-mentioned mechanism in the cassette 1, positioning accuracy for inserting the guide rail 120 required for the changer apparatus 100 can be set lower.

By displaying the second mark 45 as a positioning mark on the shutter 4, it is easy to determine whether the shutter is correctly closed when the cassette is removed, and, even if it is incompletely closed, a user can easily close it.

In the shutter 4 of the cassette 1, since the lock mechanism 5 is released by the magnet 103, the lock mechanism 5 is not exposed outside the cassette 1. This means that a releasing method of the lock mechanism 5 is hard to understand by a user. This eliminates a possibility in that the user carelessly opens the shutter. Hence, a factor for allowing infiltration of dust is reduced, and the reliability of the optical disk D stored in the cassette 1 is improved. In addition, since information is divided and stored into five optical disks D, if the sequence of the optical disks D is altered, the information cannot be correctly reproduced. According to the cassette 1, since the optical disks D cannot be easily taken out, this also provides an effect of preventing a loading sequence of the optical disks D from being altered.

Since the cassette 1 is provided with the RID 6 storing therein the ID information of the cassette 1, the ID information and types of the stored optical disk D, and the like, it is possible to eliminate operation for checking the type of the optical disk D by the changer apparatus 100 and the disk drive 110 by reading, from the RID 6, the type of the stored optical disk D. This means that a time required for so-called "mounting" the optical disk can be reduced.

As described above, according to the cassette 1 of the foregoing embodiments, versatility is increased due to a simple structure, the reliability of the optical disk D stored inside can be maintained, and it is also suitable to adopt this as a standard.

## Claims

1. A cassette (1) **characterized by** comprising:
an outer shell (2) comprising an upper wall (21) and a lower wall (22) each comprising a square shape and a circular shape combined together, a side wall (23) connecting between edges (211, 221) of the square shapes, and an opening portion (20) provided between edges (212, 222) of the circular shapes;
a plurality of trays (3), each comprising a concave portion (31) in which an optical disk (D) is placed, and an annular shape configured to support an outer peripheral edge (D1) of the optical disk (D), stacked on top of one another and stored between the upper wall (21) and the lower wall (22);
a shutter (4) comprising at least a semicircular shape along the edges (212, 222) of the circular shapes of the upper wall (21) and the lower wall (22), a gear (411) on an outer peripheral wall (41) of the shutter (4), and a plurality of shelves (421) on an inner peripheral wall (42) of the shutter (4) each configured to support each of the trays (3) along at least half a perimeter, the shutter (4) configured to rotate along the edges (212, 222) of the circular shapes from a first position (P1) for closing the opening portion (20) to a second position (P2) for opening the opening portion (20); and
a lock mechanism (5) between the side wall (23) of the outer shell (2) and a cylindrical surface along the outer peripheral wall (41) of the shutter (4), and held by an elastic force in an engaging position (R1) in which the shutter (4) is configured to be locked in the first position (P1).

2. The cassette (1) of Claim 1, **characterized in that**
the lock mechanism (5) is configured to be held in a release position (R2) away from the shutter (4) by a magnetic force applied from outside of the outer shell (2).

3. The cassette (1) of Claim 1, **characterized in that**
the lock mechanism (5) is configured to engages with the gear (411) on the outer peripheral wall (41) of the shutter (4).

4. The cassette (1) of Claim 1, **characterized in that**
the outer shell (2) comprises a guide hole (26) in the side wall (23) adjacent to ends of the edges (212, 222) of the circular shapes, the guide hole (26) engaged with a tip (121) of a guide rail (120) positioned corresponding to arrangement of the tray (3) when the tray (3) is drawn out.

5. The cassette (1) of Claim 4, **characterized in that**
the tray (3) configured to rotate together with the shutter (4), and comprises a tab (34) which is configured to run on the guide rail (120) fitted into the corresponding guide hole (26) when the shutter (4) is positioned in the second position (P2).

6. The cassette (1) of Claim 4, **characterized in that**
the tray (3) is configured to rotate together with the shutter (4), and comprises at least a notch (33) which is configured to engage with a hook (130) which is pulled out along the guide rail (120) and pushed back when the shutter (4) is positioned in the second position (P2).

7. The cassette (1) of Claim 1, **characterized in that**
the outer shell (2) comprises a bay (24) which is configured to open in the side wall (23) so that a drive gear (104) to be engaged with the gear (411) of the shutter (4) positioned between the first position (P1) and the second position (P2) approaches, and
the shutter (4) is configured to close the bay (24) when the shutter (4) is at least in the first position (P1).

8. The cassette (1) of Claim 1, **characterized in that**
the outer shell (2) comprises an RID (6) configured to store therein at least one of identification information about the cassette (1), identification information about the optical disk (D), and a type of the optical disk (D) placed on the tray (3).

9. The cassette (1) of Claim 1, **characterized in that**
the outer shell (2) comprises a first mark (25) indicative of a direction in which the cassette (1) is inserted into an apparatus which uses the cassette (1), and
the shutter (4) comprises a second mark (45) in a position coinciding with the first mark (25) when the shutter (4) is in the first position (P1).

10. The cassette (1) of Claim 1, **characterized in that**
the tray (3) comprises a linear portion (32) which is configured to engage with the shutter (4) in a rotational direction of the shutter (4) while the tray (3) is held in the shelves (421) of the shutter (4).

11. The cassette (1) of Claim 1, **characterized in that**
the concave portion (31) of the tray (3) comprises a bottom surface (31a) formed in a tapered shape in a direction deviating further away from the optical disk (D) as a position thereof shifts from the outer peripheral edge (D1) of the optical disk (D) toward a center thereof.

12. The cassette (1) of Claim 1, **characterized in that**
the outer shell (2) comprises a fitting hole (224) at least in the lower wall (22) for positioning in a rotational direction with respect to a center axis around which the shutter (4) is configured to rotate in the apparatus into which the cassette (1) is inserted.

13. The cassette (1) of Claim 1, **characterized by** further comprising:
at least two rods (7) between the side wall (23) of the outer shell (2) and a cylindrical surface along the outer peripheral wall (41) of the shutter (4), the rods (7) penetrating and formed flush with outer surfaces of the upper wall (21) and the lower wall (22).

14. A changer apparatus (100) to be loaded with at least a cassette (1) comprising an outer shell (2) comprising a shutter (4), the shutter (4) in a circular arc shape, configured to rotate along an outer peripheral wall (41), and storing therein a plurality of trays (3), each tray (3) in an annular shape, stacked on top of one another, and receiving an optical disk (D) to be placed thereon, and a lock mechanism (5) configured to lock the shutter (4),
the changer apparatus (100) **characterized by** comprising:
a release mechanism (103) configured to release the lock mechanism (5) in a noncontact manner;
a drive gear (104) configured to engage with a gear (411) on the outer peripheral wall (41) of the shutter (4) and to open the shutter (4);
a guide rail (120) configured to be inserted into a guide hole (26) in the outer shell (2) corresponding to a position of the tray (3);
a hook (130) configured to engage with a notch (33) of the tray (3) to draw out the tray (3) along the guide rail (120); and
a plurality of disc drives (110) configured to be loaded with the optical disks (D) that are removed from the cassette (1) individually.
